# DEMANDE DE BREVET EUROPEEN

(11) **EP 2 940 445 A1**
(43) Date de publication de la demande: **04.11.2015**
(21) Numéro de dépôt: 15161073.0
(22) Date de dépôt: 26.03.2015
(51) Int. Cl.: G01L 9/00, G01L 19/08, G01L 19/14, G01D 11/24

(54) **Dispositif de mesure de pression, robinet, stockage et installation comprenant un tel dispositif**

(30) Priorité: 29.04.2014 FR 1453870
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: Roberge, Guillaume, 38300 MAUBEC (FR)
(74) Mandataire: De Cuenca, Emmanuel Jaime

(57) **Abrégé**

Dispositif de mesure de pression comprenant un raccord (2) s'étendant selon une direction longitudinale autour d'un axe longitudinal (A) central, le raccord (2) comprenant une première extrémité (12) longitudinale destinée à être fixée sur un élément contenant du gaz sous pression et une seconde extrémité longitudinale munie d'une membrane (3) destinée à être soumise à la pression, la membrane (3) comportant un capteur (4) de pression du type piézoélectrique générant un signal électrique représentatif de la pression mesurée, ledit capteur (4) de pression étant raccordé à une carte (5) électronique comprenant une logique (6) électronique de traitement du signal électrique du capteur (4), le dispositif comprenant en outre une antenne (7) d'émission/réception de type radiofréquence montée sur ladite carte (5) électronique pour revoir et transmettre des données à la logique (6) électronique, la carte (5) électronique étant logée dans un boîtier (8) de protection fixé au raccord (2), caractérisé en ce que l'antenne (7) est située sur ou de façon à adjacente à un axe passant par l'axe longitudinal (A) central du raccord (4).

## Description

La présente invention concerne un dispositif de mesure de pression.

L'invention concerne plus particulièrement un dispositif de mesure de pression, notamment pour mesurer la pression d'un gaz tel que l'hydrogène, comprenant un raccord s'étendant selon une direction longitudinale autour d'un axe longitudinal central, le raccord comprenant une première extrémité longitudinale destinée à être fixée sur un élément contenant du gaz sous pression et une seconde extrémité longitudinale munie d'une membrane destinée à être soumise à la pression, la membrane comportant un capteur de pression du type piézoélectrique générant un signal électrique représentatif de la pression mesurée, ledit capteur de pression étant raccordé à une carte électronique comprenant une logique électronique de traitement du signal électrique du capteur, le dispositif comprenant en outre une antenne d'émission/réception de type radiofréquence montée sur ladite carte électronique pour revoir et transmettre des données à la logique électronique, la carte électronique étant logée dans un boîtier de protection fixé au raccord.

L'invention concerne en particulier un dispositif de mesure de pression interrogeable à distance.

Le document FR2901876A1 décrit notamment un exemple de dispositif de mesure de pression pour bouteille de fluide sous pression interrogeable à distance.

Les dispositifs de mesure de pression doivent avoir une structure compacte, une consommation d'énergie aussi réduite que possible et une bonne faculté à émettre et le cas échéant recevoir des données vers un organe de lecture. Ceci est particulièrement souhaitable lorsque l'organe de mesure est solidaire d'un robinet de bouteille de gaz sous pression.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que l'antenne est située sur ou de façon à adjacente à un axe passant par l'axe longitudinal central du raccord.

Par ailleurs, des modes de réalisation de l'invention peuvent comporter l'une ou plusieurs des caractéristiques suivantes :
- l'antenne est située à une distance comprise entre zéro et cinq millimètres d'un axe passant par l'axe longitudinal central du raccord,
- selon la direction longitudinale parallèle à l'axe longitudinal central, l'antenne est située de façon opposée à la première extrémité du raccord,
- l'antenne est située au niveau de la bordure d'une première extrémité de la carte électronique, de façon adjacente à une paroi formant un fond du boîtier,
- la carte électronique est logée dans une cavité du boîtier, le boîtier comprenant au moins une rainure de guidage et de maintien d'au moins un bord de la carte,
- le boîtier est constitué de plastique,
- la surface extérieure du boîtier est de teinte claire, notamment blanc,
- le dispositif comporte un capteur de température relié à la logique électronique, la logique électronique étant configurée pour corriger l'éventuel décalage de la mesure de pression du capteur par rapport à la pression réelle, en fonction de la température mesurée par le capteur de température et d'au moins coefficient de correction,
- la logique électronique est configurée pour corriger un éventuel décalage de la mesure de pression en fonction de la variation de température mesurée par rapport à une référence de température TO déterminée selon une formule du type : Pr(T)=Pm(T).a.DT + b dans laquelle Pr(T) est la pression réelle en bar à la température T , Pm(T) est la pression en bar mesurée par le capteur de pression à la température T, DT étant la variation T-To de température mesurée par rapport à des conditions de température To standard déterminées en degré Celsius, a et b des coefficients connus déterminés pour le capteur via au moins une mesure de calibration du capteur à une température déterminée, a étant un coefficient de correction sans dimension et b un coefficient de correction exprimé en bar,
- la logique électronique est configurée pour modifier le au moins un coefficient de correction en réponse à un signal de commande reçu par l'antenne,
- selon une direction parallèle à l'axe longitudinal central du raccord, l'antenne est située au niveau d'une première extrémité de la carte électronique, cette première extrémité de la carte électronique étant située à l'opposé d'une seconde extrémité de la carte électronique adjacente au raccord,
- la carte électronique et le raccord sont agencés en série selon une direction parallèle à l'axe longitudinal central du raccord,
- la carte électronique est située dans un plan parallèle à l'axe longitudinal central du raccord,
- le boîtier est fixé sur le raccord par l'un au moins parmi : une déformation élastique, un collage, un vissage,
- l'antenne est du type à émission/réception bidirectionnelle à une fréquence comprise de préférence entre 50 et 300kHz et notamment de l'ordre de 120 à 130kHz,
- la logique électronique est configurée pour émettre automatiquement un signal de réponse sans fil via l'antenne à la réception d'un signal reçu,
- le dispositif de mesure peut être utilisé dans une installation comprenant un stockage de gaz sous pression, le dispositif de mesure étant solidaire d'un robinet relié à un stockage de gaz sous pression, l'installation comprenant un organe de soutirage/remplissage de gaz sélectivement raccordable au robinet, l'organe de soutirage/remplissage comprenant une antenne qui, lorsque l'organe de soutirage/remplissage de gaz est raccordé au robinet, est située de façon adjacente à l'antenne du dispositif de mesure,
- en position raccordée de l'organe de soutirage/remplissage sur le robinet, l'antenne du dispositif de mesure et l'antenne de l'organe de soutirage/remplissage de gaz sont alignés selon l'axe longitudinal central du raccord et espacés d'un distance comprise de préférence entre un et cinq millimètres,
- la réception par l'antenne de l'organe de soutirage/remplissage d'un signal envoyé par l'antenne du dispositif de mesure, forme un détecteur d'une position raccordée correcte de l'organe de soutirage/remplissage sur le robinet,
- la logique électronique comprend un système d'acquisition et de traitement de données et une mémoire, notamment un microprocesseur ou microcontrôleur,
- la logique électronique est configurée pour déterminer et stocker au moins une des informations suivantes des informations d'identification d'un stockage, des données de variation de pression mesurée, des informations de pression représentatives d'une fuite,
- la première extrémité du raccord comprend une portion filetée ou taraudé formée autour de l'axe longitudinal central,

L'invention peut concerner également un robinet pour stockage de gaz sous pression comprenant un dispositif de mesure de pression conforme à l'une quelconque des caractéristiques ci-dessus ou ci-après.

L'invention peut concerner également un stockage de gaz sous pression, notamment bouteille ou ensemble de bouteilles comprenant un tel robinet.

L'invention peut concerner également une installation comprenant un stockage de gaz sous pression muni d'un robinet et un organe de soutirage et/ou de remplissage de gaz sélectivement raccordable au robinet, le stockage de gaz sous pression étant conforme aux caractéristiques ci-dessus ou ci-après, l'organe de soutirage/remplissage comprenant une antenne qui, lorsque l'organe de soutirage/remplissage de gaz est raccordé au robinet, est située de façon adjacente à l'antenne du dispositif de mesure.

L'invention peut concerner également une installation comprenant un capteur de température relié à la logique électronique du dispositif de mesure, ladite logique électronique étant configurée pour corriger l'éventuel décalage de la mesure de pression du capteur par rapport à la pression réelle en fonction de la température mesurée par le capteur de température et d'au moins coefficient de correction, la logique électronique étant configurée pour modifier le au moins un coefficient de correction en réponse à un signal de commande envoyé par l'antenne de l'organe de soutirage/remplissage à l'antenne du dispositif de mesure de pression.

L'invention peut concerner également une installation comprenant un stockage de gaz sous pression, muni d'un dispositif de mesure monté sur un robinet relié au stockage de gaz sous pression, le dispositif de mesure de pression comprenant un raccord comprenant une première extrémité prévue pour son montage et une seconde extrémité munie d'une membrane destinée à être soumise à la pression, la membrane comportant un capteur de pression du type piézoélectrique générant un signal électrique de mesure, ledit capteur de pression étant raccordé à une carte électronique comprenant une logique électronique de traitement du signal électrique du capteur, le dispositif comprenant en outre une antenne d'émission/réception de type radiofréquence montée sur ladite carte électronique pour revoir et transmettre des données à la logique électronique, la carte électronique étant logée dans un boîtier de protection fixé au raccord, l'installation comprenant un organe de soutirage/remplissage de gaz sélectivement raccordable au robinet, l'organe de soutirage/remplissage comprenant une antenne qui, lorsque l'organe de soutirage/remplissage de gaz est raccordé au robinet, est située de façon adjacente à l'antenne du dispositif de mesure, l'installation comprenant un capteur de température relié à la logique électronique, la logique électronique étant configurée pour corriger l'éventuel décalage de la mesure de pression du capteur par rapport à la pression réelle en fonction de la température mesurée par le capteur de température et d'au moins coefficient de correction, la logique électronique étant configurée pour modifier le au moins un coefficient de correction en réponse à la réception, par l'antenne du dispositif de mesure, d'un signal de commande transmis par l'antenne de l'organe de soutirage/remplissage de gaz raccordé au robinet.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe, schématique et partielle, illustrant en exemple de structure possible d'un dispositif de mesure selon l'invention,
- la figure 2 représente une vue, schématique partiellement en coupe, illustrant le dispositif de mesure de la figure 1 dans un état démonté,
- la figure 3 représente une vue de face d'un détail du dispositif de la figure 1 représentant un exemple de structure de capteur de pression,
- la figure 4 représente une vue en perspective d'un détail du dispositif de la figure 1 représentant un exemple de boîtier du dispositif de mesure,
- la figure 5 illustre de façon schématique et partielle un exemple de fonctionnement du capteur de mesure du dispositif de la figure 1,
- la figure 6 représente une vue en coupe, schématique et partielle, illustrant une installation comprenant un dispositif de mesure monté sur un robinet de bouteille de gaz sous pression,
- la figure 7 représente une vue en coupe, schématique et partielle, illustrant l'installation de la figure 6 dans laquelle un organe de remplissage/soutirage de gaz coopère avec le robinet et le dispositif de mesure de pression.

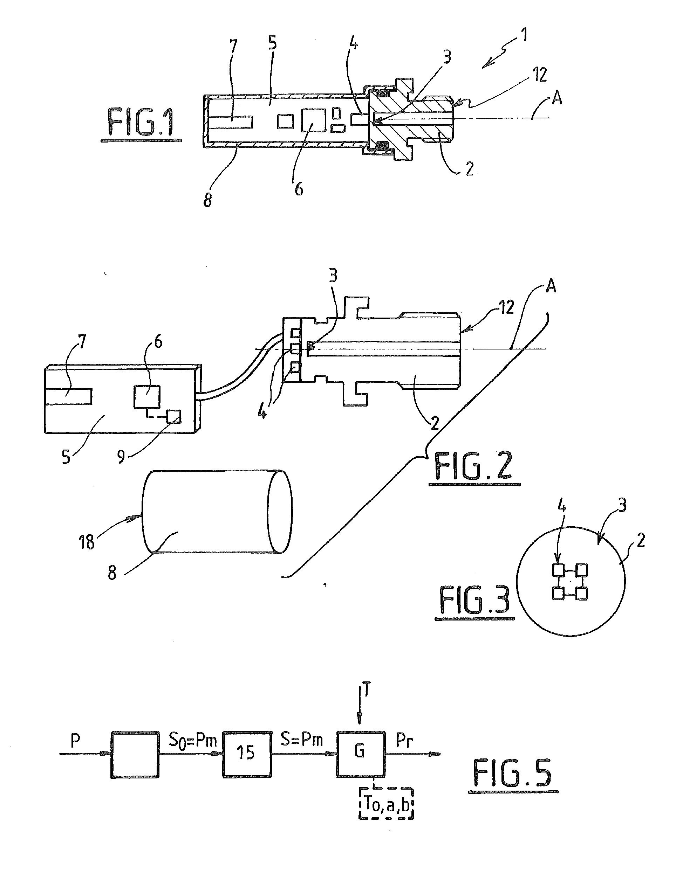

Le dispositif 1 de mesure de pression représenté aux figures 1 à 3 comprend un raccord 2, s'étendant selon une direction longitudinale autour d'un axe longitudinal A central. Le raccord 2 comprend une première extrémité 12 longitudinale, par exemple filetée, destinée à être fixée sur un élément contenant du gaz sous pression, par exemple un robinet d'une bouteille de gaz sous pression. L'axe longitudinal A central est par exemple l'axe de révolution du filetage.

Le raccord 2 comprend une seconde extrémité longitudinale munie d'une membrane 3 destinée à être soumise à la pression à mesurer et comportant un capteur 4 de pression. De façon classique le raccord 2 peut avoir une forme tubulaire définissant un trou borgne (le fond du trou étant constitué par la membrane 3 et la partie interne du tube étant centrée sur l'axe A longitudinal central) pour permettre le transit du gaz mettant en communication fluidique la membrane 3 avec la première extrémité 12. Par exemple, le raccord 2 est constitué de l'un au moins des matériaux suivants usinés : de l'inox (notamment du type 316L), un acier, ou tout autre matériau approprié.

L'épaisseur de la membrane 3 (par exemple entre 1,5 et 2mm) est choisie en fonction du niveau de pression à mesurer (et est aussi fonction de la précision/sensibilité/dérive maximale dans le temps souhaitée). Classiquement, la pression du gaz qui entre dans le raccord et vient au contact de la membrane 3 induit une déformation de cette dernière. Cette déformation est détectée par le capteur 4 de préférence de type piézoélectrique qui génère en réponse un signal électrique représentatif de la déformation mesurée et donc de la pression mesurée.

Le capteur 4 de pression est raccordé, par exemple par voie filaire (quatre fils par exemple), à une carte 5 électronique comprenant une logique 6 électronique d'acquisition et traitement de données et notamment du signal électrique du capteur 4. La logique 6 électronique comprend par exemple au moins un microprocesseur et une mémoire.

Le dispositif 1 comprend en outre une antenne 7 d'émission/réception de type radiofréquence (par exemple de technologie « RFID ») montée sur ladite carte 5 électronique pour revoir et transmettre des données depuis/vers la logique 6 électronique. L'antenne 7 est notamment prévue pour transmettre à distance une information relative à la valeur de pression mesurée par le capteur 4.

De préférence le dispositif 1 ne dispose pas d'afficheur, la lecture de la mesure de pression étant réalisée via un système de communication sans fil avec l'antenne 7.

La carte 5 électronique est logée dans un boîtier 8 de protection fixé au raccord 2, par exemple par collage, vissage ou encliquetage. De préférence le boîtier 8 est assemblé de façon étanche ou pour limiter l'entrée d'humidité en son sein.

Selon une particularité avantageuse, en position montée (figure 1) l'antenne 7 est située sur ou de façon à adjacente à l'axe passant par l'axe longitudinal A central du raccord 4. C'est-à-dire que l'antenne 7 est alignée avec l'axe A longitudinal central du raccord 2. Dans le cas où le dispositif 1 a une forme générale cylindrique cela signifie que l'antenne 7 est située sur ou au plus près de l'axe de symétrie de ce cylindre, c'est-à-dire l'axe passant par le centre de ses sections circulaires.

De plus, de préférence, l'antenne 7 est située à une extrémité longitudinale opposée à la première extrémité du raccord 2. Par exemple l'antenne 7 est située au niveau d'un bord de la première extrémité de la carte 5 électronique et de façon adjacente à une paroi 18 formant un fond du boîtier 8 (cf. figure 1). C'est-à-dire que l'antenne 7 n'est séparée de l'extérieur du dispositif 1 que l'épaisseur du boîtier 8 (0,1 à 5 mm) plus le cas échant quelques dixième de millimètre ou quelques millimètres.

C'est-à-dire que l'antenne 7 est située en bout de dispositif selon la direction longitudinale A et de façon centrale selon une section transversale à l'axe longitudinal A.

Cette architecture permet de conférer à l'antenne 7 une impédance de bonne qualité. De préférence, la carte 5 électronique (son plan de masse) et ses composants sont adaptés à cet emplacement de l'antenne 7 pour améliorer encore le facteur de qualité d'antenne 7. La forme, l'inductance et l'orientation de l'antenne 7 sont ainsi adaptées au boitier 8 pour permettre une communication sans fil optimale avec une autre antenne d'un organe extérieur.

Le positionnement de l'antenne 7 de façon centrale et à une extrémité du dispositif 1 permet un positionnement précis de l'antenne 7 quelle que soit la position angulaire du raccord 2 (le raccord 2 est vissé par exemple). Ainsi, l'antenne 7 se trouve dans une zone au plus proche de l'axe central A (à l'épaisseur près de la carte 5) et au plus près de la surface extérieure du dispositif 1 (à l'épaisseur du boîtier 8 près).

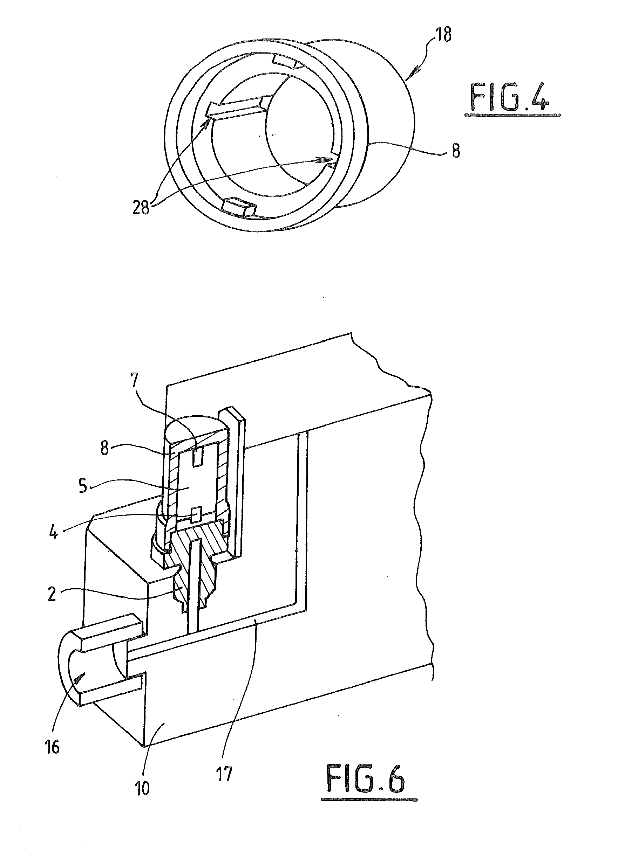

De préférence et comme visible à la figure 4, la carte 5 électronique peut être logée dans une cavité du boîtier 8. De plus, le boîtier 8 peut comprendre au moins une et de préférence deux rainures 28 de guidage et de maintien de deux bords opposés de la carte 5. C'est-à-dire que la carte 5 électronique peut être glissée dans le boîtier 8 à la manière d'un tiroir ou d'une glissière.

De préférence le dispositif 1 ne comporte pas de sources ou réserve d'énergie propre (batterie, capteur solaire ou autre) mais reçoit son énergie via l'antenne 7 (alimentation inductive). La structure ci-dessous permet d'optimiser l'efficacité de l'antenne 7 et donc la consommation électrique du dispositif.

L'usinage de l'épaisseur de la membrane 3 est sujet à des tolérances de fabrication. La sensibilité (gain) du capteur 4 de pression varie en fonction de cette épaisseur. Il est donc préférable d'étalonner indépendamment chaque capteur 4 de pression.

Comme visible schématiquement à la figure 3, le capteur 4 de pression peut comprendre un dispositif du type pont de Wheatstone disposé au dos de la membrane 3 (au centre où a lieu la déformation).

En périphérie de la membrane 3 (où il n'y a pas ou peu de déformation) il est connu de placer des résistances dédiées à l'ajustement de la valeur du zéro (« offset ») et de la compensation de celui-ci en fonction de la température. Il peut cependant subsister un effet de la température ambiante sur la mesure de pression réalisée par le capteur 4. La compensation obtenue classiquement par des résistances n'est valable que pour une plage limitée de températures (typiquement entre -10°C et +40°C). De plus, dans certains cas, cette correction peut être non linéaire.

De préférence, et comme représenté à la figure 3 le dispositif 1 ne comporte pas de résistance(s) de compensation en température du niveau du zéro (« offest »).

Au contraire, le dispositif 1 comporte un capteur 9 de température (disposé sur la carte 5 électronique) et relié à la logique 6 électronique. De plus, la logique 6 électronique est configurée (programmée) pour corriger l'éventuel décalage de la mesure de pression Pm du capteur 4 par rapport à la pression réelle Pr via une loi de correction en fonction de la température T mesurée par le capteur 9 de température et d'au moins coefficient a, b de correction prédéterminé selon une loi préétablie et stockée dans la logique 6 électronique.

La logique 6 électronique est configurée pour compenser la mesure de pression du capteur 4 en fonction de la température T mesurée selon une loi de compensation de la pression en fonction de la température programmée dans la logique 6 électronique. De préférence cette loi est linéaire (variation linéaire de la pression en fonction de la température selon une équation du premier degré). Cette loi peut être déterminée en réalisant une mesure de sortie du capteur 4 pour deux points en température afin de définir la valeur de ce paramètre de compensation de l'effet de la température sur la mesure de la pression.

Comme illustré schématiquement à la figure 4, la pression P du gaz sur la membrane 3 (côté première extrémité 12 longitudinale) créé une déformation de la membrane 3 qui génère un signal SO électrique du capteur 4 de pression à un niveau relativement bas (de l'ordre du millivolt par exemple) et correspondant à la valeur de pression mesurée Pm. Ce signal SO est amplifié sur la carte électronique via un amplificateur 15 puis le signal S analogique amplifié résultant est converti en valeur numérique par convertisseur analogique/numérique de préférence intégré à la logique 6 électronique. La logique 6 électronique compense également la mesure de pression Pm du capteur 4 en fonction de la température T mesurée via une loi de compensation de la pression en fonction de la température programmée dans la logique 6 électronique pour donner au final une valeur de pression réelle Pr.

Par exemple la logique 9 électronique est configurée pour corriger l'éventuel décalage de la mesure de pression Pm en fonction de la variation de température DT=T-T0 mesurée par rapport à une référence de température To déterminée selon une formule du type : Pr(T)=Pm(T).a.DT + b dans laquelle Pr(T) est la pression réelle en bar (corrigée) à la température (T), Pm(T) est la pression mesurée par le capteur 4 de pression à la température T en bar, DT étant la variation T-To de température mesurée par rapport à des conditions de température To standard déterminées en degré Celsius (°C), a et b des coefficients connus déterminés pour le capteur via au moins une mesure de calibration du capteur 4 à une température déterminée, a étant un coefficient de correction sans dimension et b un coefficient de correction exprimé en bar.

Avantageusement, la logique 6 électronique peut être configurée pour modifier au moins un coefficient a, b de correction ou la loi de correction en réponse à un signal de commande reçu via l'antenne 7. C'est-à-dire que le dispositif et notamment la correction de la mesure du capteur 4 de pression peut être ré-étalonné si nécessaire, par exemple à chaque fois que le dispositif revient dans un centre de conditionnement. Par exemple, les valeurs de pression mesurées par le capteur peuvent être comparées aux valeurs de pression connues dans un centre de conditionnement faisant office de référence. La valeur du zéro (« offset ») ainsi que l'allure (pente) de la correction en température peuvent ainsi être reprogrammées dans la logique 6 électronique (coefficients a et b). Ceci peut être très utile lorsque le capteur 4 de pression a tendance à dériver dans le temps (dérive du zéro).

De la même façon, une loi de compensation de l'effet de la température sur la mesure de pression Pm peut être prévue pour compenser également le gain du capteur 4 en fonction de la température T mesurée. Cependant, de préférence, cette fonctionnalité n'est pas intégrée dans la logique 6 électronique car l'effet de la température T sur le gain est jugé négligeable.

De préférence, le boîtier 8 est constitué de plastique mais pourrait être composé de tout autre matériau approprié. De préférence également, au moins la surface externe du boîtier 8 est de teinte claire, notamment blanc. Ceci permet de limiter l'échauffement du capteur 4 en cas d'exposition au soleil et donc limiter l'influence de la température sur la mesure de pression.

Comme illustré schématiquement et partiellement à la figure 6, le dispositif 1 de mesure de pression peut être monté sur un robinet 10 comprenant une extrémité destinée à être reliée à un réservoir de gaz sous pression. Le dispositif 1 mesure la pression dans un circuit 17 fluidique communiquant avec le réservoir sous pression.

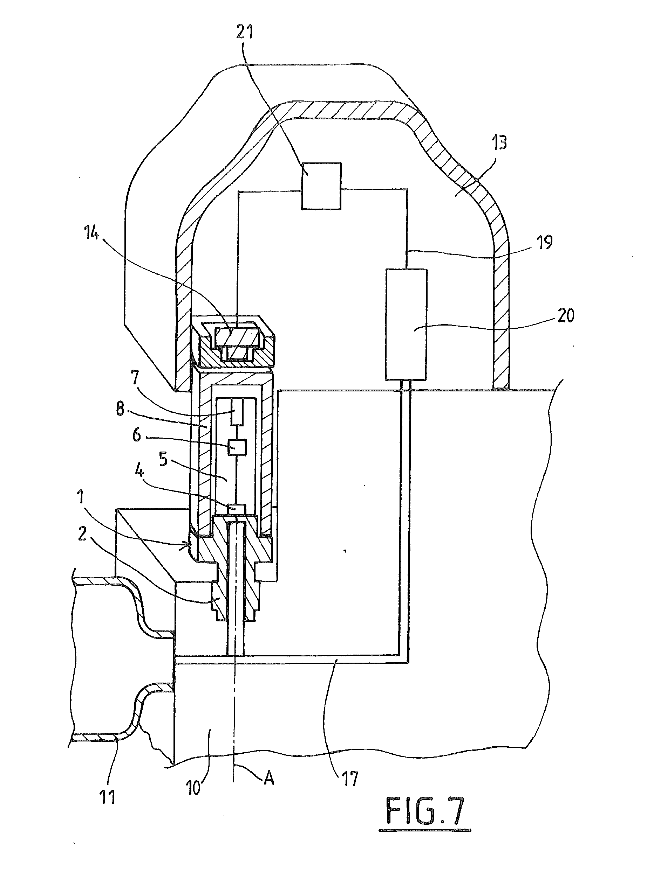

La figure 7 illustre schématiquement et partiellement une installation de conditionnement d'un stockage 11 de gaz sous pression comprenant un robinet 2 muni d'un tel dispositif 1de mesure de pression.

L'installation comprend un organe 13 de soutirage/remplissage de gaz sélectivement raccordable mécaniquement au robinet 2. L'organe 13 de soutirage/remplissage comprenant un circuit 19 interne de fluide destiné à se raccorder au circuit 17 du robinet 2. L'organe 13 de soutirage/remplissage comprend de préférence un organe 20 tel qu'un pousse clapet mobile pour ouvrir une vanne dans le circuit 17 du robinet 10.

L'organe 13 de soutirage/remplissage comprend une antenne 14, notamment de type RFID qui, lorsque l'organe 13 de soutirage/remplissage de gaz est raccordé au robinet 2, est située de façon adjacente à l'antenne 7 du dispositif 1 de mesure (notamment dans le prolongement ou à l'aplomb de l'antenne 7).

En position raccordée de l'organe 13 de soutirage/remplissage sur le robinet 2, l'antenne 7 du dispositif 1 de mesure et l'antenne 14 de l'organe 13 de soutirage/remplissage de gaz sont alignés selon l'axe A longitudinal central du raccord 2 et espacés d'un distance comprise par exemple entre 1 et 5mm

La structure du dispositif 1 de mesure et notamment la position de son antenne 7 permet de disposer en face et de façon fiable une antenne 14 conjuguée pour un échange de données et un transfert d'énergie. La position de l'antenne 7 du dispositif 1 de mesure transversalement à l'axe A longitudinal central est indépendante de la position angulaire du raccord 2 sur le robinet 10. La position de l'antenne 7 du dispositif 1 de mesure selon l'axe A longitudinal central permet à une antenne conjuguée 14 de venir au plus proche pour assurer un couplage inductif efficace.

De, préférence l'antenne 14 de la prise de conditionnement est reliée à une logique 21 électronique d'acquisition et de traitement de données.

La logique 21 électronique de la prise 13 de conditionnement peut notamment être configurée pour transmettre et recevoir des données du dispositif 1 de mesure de pression via le couplage inductif des antennes 7, 14.

Par exemple, logique 21 électronique de la prise 13 de conditionnement peut recevoir ou transférer (modifier) l'une au moins des données ci-dessous :
- un numéro d'identification du dispositif 1 ou du capteur 4 de pression,
- la nature ou l'identification du robinet 10 et/ou du stockage 10 relié au robinet 2, notamment le volume du stockage 10,
- la pression de service du stockage 11, sa capacité de stockage (en Nm³),
- le débit de remplissage ou soutirage maximal supporté par le stockage (en m³ par heure)
- la pression minimale d'utilisation du stockage en bar (dans le cas notamment où le robinet 10 intègre un clapet de pression résiduelle (RPV)),
- le nombre de stockages 11 associés au robinet 2,
- la pression maximale mesurée au cours d'une période déterminée (par exemple les douze derniers mois),
- les températures minimales et maximales mesurées par le capteur de température 9 au cours d'une période déterminée,
- les alarmes générées par l'installation du fait de situation à risque.

La logique 21 électronique du dispositif 1 de mesure peut être configurée pour émettre automatiquement un signal sans fil de réponse via l'antenne 7 à la réception d'un signal reçu par l'antenne 7 (provenant de l'antenne 14 d'une prise 13 de conditionnement). C'est-à-dire que le couplage magnétique entre les deux antennes 7, 14 permet de former un détecteur d'une position raccordée entre ces deux éléments 13,1.

Par exemple, lors de la connexion de la prise 13 de soutirage sur un robinet 10, le fait de détecter le dispositif 1 peut déclencher automatiquement un test de fuite du robinet ou d'une partie du circuit ou toute autre opération ou autoriser une ouverture de vanne via par exemple l'actionnement (déplacement) d'un pousse-clapet.

De préférence, le dispositif 1 de mesure est alimenté électriquement et réveillé (mis en marche) via l'énergie fournie par l'antenne 14 de la prise 13 de conditionnement.

De même, l'absence de signal entre les antennes 7, 14 permet de détecter une déconnexion physique entre la prise 13 et le robinet 2. Par exemple, après un certains nombre de tentatives de lecture (trois tentatives de lecture par exemple pendant une à deux secondes) par l'antenne 14 de la prise de la présence de l'antenne 7 du dispositif 1 de mesure la prise 13 de conditionnement peut commander une fermeture de vanne(s) et/ou la transmission d'une information correspondante. Dans le cas notamment où une installation utilise simultanément plusieurs stockages 11 munis chacun d'un dispositif 1 de mesure, en cas de perte de communication avec un dispositif 1 l'installation peut commander la fermeture d'une vanne d'isolement du stockage et ouvrir la vanne d'un autre stockage 11.

De plus, à chaque connexion d'un nouveau stockage 11 sur l'installation (par exemple lorsque l'identifiant lu du dispositif 1 de mesure a changé), l'installation peut être configurée pour réaliser automatiquement un test de fuite du circuit considéré qui vient d'être raccordé.

Par exemple, une vanne haute pression peut être ouverte pour libérer du gaz du stockage 11 dans une ligne collectrice puis la vanne est fermée et la pression est mesurée dans la ligne. En cas de chute de pression relativement faible (en dessous d'un seuil de sécurité déterminé) l'installation valide le stockage et permet le soutirage.

Le dispositif de mesure permet ainsi de transmettre des informations de pression au sein d'un stockage 11. Ceci permet de suivre la pression des stockages 11 pour assurer la logistique. Pour cela, la prise 13 de soutirage peut lire en continu les niveaux de pressions des mesurés par les capteurs 4 de pression et peut transmettre les informations à une centrale de commande.

En fonction des niveaux de pression détectés par rapport aux niveaux de pression attendus en fonction de l'état de vanne(s), l'installation peut ainsi détecter et enregistrer et transmettre des défauts détectés, notamment :
- une fuite du stockage 11, un disfonctionnement d'un clapet de pression résiduel, la perte d'un capteur...
- un remplissage incorrect,
- un débit de soutirage trop important (risquant de générer un cloquage d'un récipient composite),
- une pression de sortie anormalement faible alors que vanne d'isolation est ouverte,
- une pression en aval d'un détendeur trop haute, un problème du détendeur (ou un défaut du capteur de pression).

Tout ou partie des paramètres initiaux stockés dans la logique 6 électronique du dispositif 1 de mesure peuvent être programmés et reprogrammés sans fil via l'antenne 7.

Le couplage magnétique entre les deux antennes 7, 14 peut former un détecteur de position raccordée pour autoriser à cette condition l'ouverture d'une vanne. A défaut, une vanne du robinet peut être refermée automatiquement.

Par exemple ceci permet de savoir qu'une prise de conditionnement est bien connectée au robinet. Si les deux antennes sont hors de portée (trop éloignées ou mal positionnées) la connexion est mauvaise et l'ouverture d'une vanne d'isolation est interdit car dangereuse.

Pa exemple, l'installation comprend un organe mobile d'ouverture d'une vanne du robinet du stockage, et l'organe de soutirage et/ou de remplissage comprend une logique électronique raccordée à l'organe mobile d'ouverture, et au dispositif de mesure de pression, ladite logique électronique étant configurée pour permettre l'ouverture de la vanne du robinet via l'organe mobile d'ouverture uniquement lorsque l'antenne du dispositif de mesure est adjacente à l'antenne de l'organe de soutirage, c'est-à-dire lorsque l'antenne du dispositif reçoit un signal déterminé de l'antenne de l'organe de soutirage.

## Revendications

1. Dispositif de mesure de pression, notamment pour mesurer la pression d'un gaz tel que l'hydrogène, comprenant un raccord (2) s'étendant selon une direction longitudinale autour d'un axe longitudinal (A) central, le raccord (2) comprenant une première extrémité (12) longitudinale destinée à être fixée sur un élément contenant du gaz sous pression et une seconde extrémité longitudinale munie d'une membrane (3) destinée à être soumise à la pression, la membrane (3) comportant un capteur (4) de pression du type piézoélectrique générant un signal électrique représentatif de la pression mesurée, ledit capteur (4) de pression étant raccordé à une carte (5) électronique comprenant une logique (6) électronique de traitement du signal électrique du capteur (4), le dispositif comprenant en outre une antenne (7) d'émission/réception de type radiofréquence montée sur ladite carte (5) électronique pour revoir et transmettre des données à la logique (6) électronique, la carte (5) électronique étant logée dans un boîtier (8) de protection fixé au raccord (2), **caractérisé en ce que** l'antenne (7) est située sur ou de façon à adjacente à un axe passant par l'axe longitudinal (A) central du raccord (4), à une distance comprise entre zéro et cinq millimètres d'un axe passant par l'axe longitudinal (A) central du raccord (4) et **en ce que** l'antenne (7) est située au niveau de la bordure d'une première extrémité de la carte (5) électronique, de façon adjacente à une paroi (18) formant un fond du boîtier (8).

2. Dispositif selon la revendication 1 **caractérisé en ce que** l'antenne (7) est du type à émission/réception bidirectionnelle à une fréquence comprise de préférence entre 50 à 300kHz et notamment entre 120 et 130kHz.

3. Dispositif selon la revendication 2, **caractérisé en ce que** la logique (6) électronique est configurée pour émettre automatiquement un signal de réponse sans fil via l'antenne, à la réception d'un signal reçu.

4. Dispositif selon l'une quelconque des revendications 1 à 3, **caractérisé en ce que**, selon la direction longitudinale parallèle à l'axe longitudinal (A) central, l'antenne (7) est située de façon opposée à la première extrémité du raccord (2).

5. Dispositif selon l'une quelconque des revendications 1 à 4, **caractérisé en ce que** la carte (5) électronique est logée dans une cavité du boîtier (8), le boîtier (8) comprenant au moins une rainure (28) de guidage et de maintien d'au moins un bord de la carte (5).

6. Dispositif selon l'une quelconque des revendications 1 à 5, **caractérisé en ce que** le boîtier (8) est constitué de plastique.

7. Dispositif selon l'une quelconque des revendications 1 à 6, **caractérisé en ce que** la surface extérieure du boîtier (8) est de teinte claire, notamment blanc.

8. Dispositif selon l'une quelconque des revendications 1 à 7, **caractérisé en ce qu'**il comporte un capteur (9) de température relié à la logique (6) électronique et **en ce que** la logique (6) électronique est configurée pour corriger l'éventuel décalage de la mesure de pression (Pm) du capteur (4) par rapport à la pression réelle (Pr), en fonction de la température (T) mesurée par le capteur (9) de température et d'au moins coefficient (a, b) de correction.

9. Dispositif selon la revendication 8, **caractérisé en ce que** la logique (6) électronique est configurée pour corriger un éventuel décalage de la mesure de pression (Pm) en fonction de la variation de température (DT=T-TO) mesurée par rapport à une référence de température TO déterminée selon une formule du type : Pr(T)=Pm(T).a.DT + b dans laquelle Pr(T) est la pression réelle en bar à la température (T), Pm(T) est la pression en bar mesurée par le capteur (4) de pression à la température T, DT étant la variation T-To de température mesurée par rapport à des conditions de température To standard déterminées en degré Celsius, a et b des coefficients connus déterminés pour le capteur via au moins une mesure de calibration du capteur (4) à une température déterminée, a étant un coefficient de correction sans dimension et b un coefficient de correction exprimé en bar.

10. Dispositif selon la revendication 8 ou 9, **caractérisé en ce que** la logique (6) électronique est configurée pour modifier le au moins un coefficient (a, b) de correction en réponse à un signal de commande reçu par l'antenne (7).

11. Robinet (10) pour stockage (11) de gaz sous pression comprenant un dispositif (1) de mesure de pression conforme à l'une quelconque des revendications 1 à 10.

12. Stockage de gaz sous pression, notamment bouteille ou ensemble de bouteilles comprenant un robinet (10) selon la revendication 11.

13. Installation comprenant un stockage (11) de gaz sous pression muni d'un robinet (10) et un organe (13) de soutirage et/ou de remplissage de gaz sélectivement raccordable au robinet (2), caractérisé en ce le stockage (11) de gaz sous pression est conforme à la revendication 12, l'organe (13) de soutirage/remplissage comprenant une antenne (14) qui, lorsque l'organe (13) de soutirage/remplissage de gaz est raccordé au robinet (2), est située de façon adjacente à l'antenne (7) du dispositif (1) de mesure.

14. Installation selon la revendication 13, **caractérisé en ce qu'**elle comprend un organe (20) mobile d'ouverture d'une vanne du robinet (10) du stockage (11), et **en ce que** l'organe (13) de soutirage et/ou de remplissage comprend une logique électronique (21) raccordée à l'organe (20) mobile d'ouverture, et au dispositif (1) de mesure de pression, ladite logique électronique (21) étant configurée pour permettre l'ouverture de la vanne du robinet via l'organe (20) mobile d'ouverture uniquement lorsque l'antenne (7) du dispositif de mesure est adjacente à l'antenne (14) de l'organe (13) de soutirage, c'est-à-dire lorsque l'antenne (7) du dispositif reçoit un signal déterminé de l'antenne (14) de l'organe (13) de soutirage.

15. Installation selon la revendication 13 ou 14 **caractérisé en ce qu'**elle comprend un capteur (9) de température relié à la logique (6) électronique du dispositif (1) de mesure , ladite logique (6) électronique étant configurée pour corriger l'éventuel décalage de la mesure de pression du capteur (4) par rapport à la pression réelle en fonction de la température mesurée par le capteur (9) de température et d'au moins coefficient (a, b) de correction, **caractérisé en ce que** la logique (6) électronique est configurée pour modifier le au moins un coefficient (a, b) de correction en réponse à un signal de commande envoyé par l'antenne (14) de l'organe (13) de soutirage/remplissage à l'antenne (7) du dispositif (1) de mesure de pression.
